# EUROPEAN PATENT SPECIFICATION

(11) **EP 3 315 397 B1**
(45) Date of publication and mention of the grant of the patent: **10.07.2019**
(21) Application number: 17193164.5
(22) Date of filing: 26.09.2017
(51) Int. Cl.: B63B 25/00, B63B 25/28, B63B 27/30, B63B 38/00, B65D 88/12, B66C 1/10, B66C 1/22

(54) **CONTAINER CATCHING SYSTEM WHICH IS SEA-PROOF**
CONTAINERAUFFANGSYSTEM, DAS SEEFEST IST
SYSTÈME DE CAPTURE DE CONTENEUR CONÇU POUR LE TRANSPORT MARITIME

(30) Priority: 18.10.2016 NL 2017631
(43) Date of publication of application: 02.05.2018
(73) Proprietor: Hallcon b.v., 3155 EB Maasland (NL)
(72) Inventor: RUIVENKAMP, Johan, 3155 EB Maasland (NL)
(74) Representative: Klavers, Cornelis

(56) References cited:
- WO-A1-2015/149439
- DE-A1- 19 822 565
- FR-A1- 2 552 381
- US-A- 3 776 169

## Description

The present invention relates to a container catching system which is sea proof and the use thereof on board ships.

Such a container catching system is known from DE 198 22 565 A1. The container catching system comprises a frame with a base on which a container is to be positioned, hinge pins secured to the frame in the plane of the frame, and arms situated around the base. Each arm has an abovementioned hinge pin, wherein arm portions situated above said hinge pin contact, in the unfolded state, a container to be lowered to guide the container towards the base.

It is an object of the present invention to provide a more universal, but also safely applicable, sea-proof container catching system, which can be used also in rough weather conditions at sea to bring containers, in particular sea containers, on board of a ship in a safe manner and secure them in situ.

To achieve this, the container catching system according to the invention has the features of claim 1.

An advantage of the invention resides in that the hinged arms can be moved at least away from each other, thus allowing a container to be manoeuvred relatively easily within the area bounded by said arms, in order to be guided eventually to a predetermined position on the base between the arms. By virtue thereof, the invention can be used in a safe manner in turbulent water such as at sea, without the intervention of deck personnel, for example for lifting containers from and/or eventually placing them on deck of a supply vessel. In particular when the top arm portions are in the unfolded state when the container is being lowered, the outward extending top arm portions located above the hinge pin and a bottom angle profile of the lowered container contact one another. As a result, these arm portions guide the container towards the base. And when the container is lowered further, the container descends in a previously determined manner in the direction of the predetermined position on the base. When the angle profile of the container passes the hinge pin, contact is made with the arm portion situated below the hinge pin, which arm portion acts as a laterally movable cam, which causes in particular the top portion of the relevant arm, acting as a wall guide, to engage the side wall of the container when the latter is lowered accurately on to the base by the eventually fully vertical arm.

The power necessary to make the relevant top arm portion hinge is provided purely mechanically, as described hereinabove, by the container contacting the bottom arm portion and thereby moving said bottom arm portion. Consequently, additional energy-consuming measures, such as actuators, are not required to enclose the container in the predetermined position between the arms.

An embodiment of the container catching system is characterized according to the invention in that neighbouring arms are connected to one another by means of girders.

By connecting the arms to one another, and by being hinged, said interconnected arms become mechanically stronger, enabling them to better take up the substantial impact forces caused by swinging containers without damage being caused.

A further embodiment of the container catching system is characterized according to the invention in that at least the arm portions located above the hinge pin can be folded such that they are close to the base.

This has the advantage that the container system can be folded flat and takes up little space, allowing in principle a plurality of frames to be stacked on top of one another. In addition, if necessary, one or more frames can be transported simultaneously, wherein the bottom frame of the stack can be mounted on a vehicle or a vessel.

Further detailed, possible embodiments explained in the other claims are mentioned, together with the associated advantages, in the following description.

The container catching system which is sea proof according to the present invention will now be explained in greater detail with reference to the figures mentioned below, in which corresponding elements are indicated by means of the same reference numerals.
In the figures:
Figure 1 shows an embodiment of the system according to the invention comprising hinged arms;
Figures 2a and 2b show possible subsequent positions of a container lowered between the arms; and
Figure 3 is a side view of the system according to the invention, wherein the container is positioned on the base.

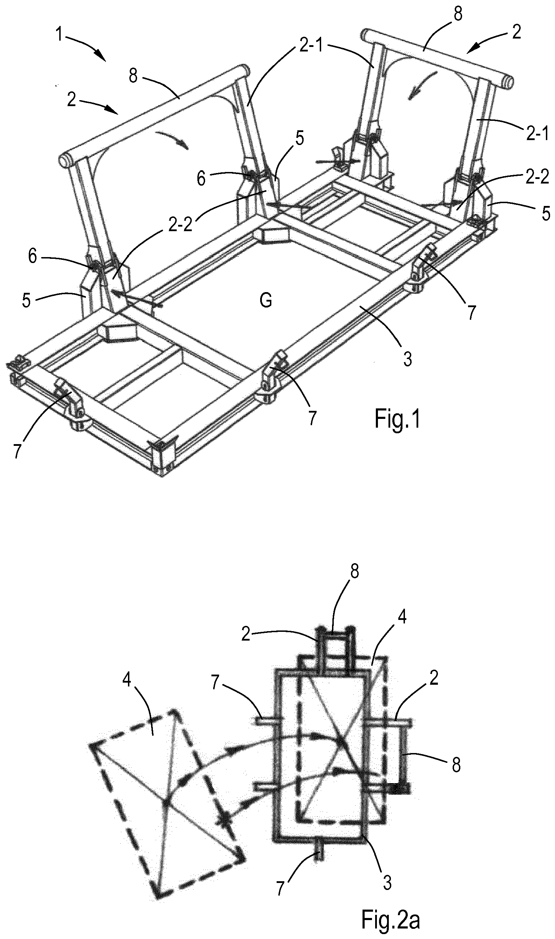

Figure 1 shows a container catching system 1 which is sea proof, comprising arms 2 which can move in the direction of the arrows and in the opposite direction, said arms being secured on a frame 3. Said frame 3 has a base G which is dimensioned such that a container 4 can be positioned on the frame. Around the frame 3, raised portions 5 are provided in which hinge pins 6 can be rotated which form part of the arms 2 which can hinge about the pins 6. Said pins 6 of the hinged arms 2 are located above the base G. Each hinged arm 2 has a top arm portion 2-1 and a bottom arm portion 2-2 which can be rigidly interconnected by means of a controllable latch, not shown in the figures, enabling them to swing about the joint hinged pin 6.

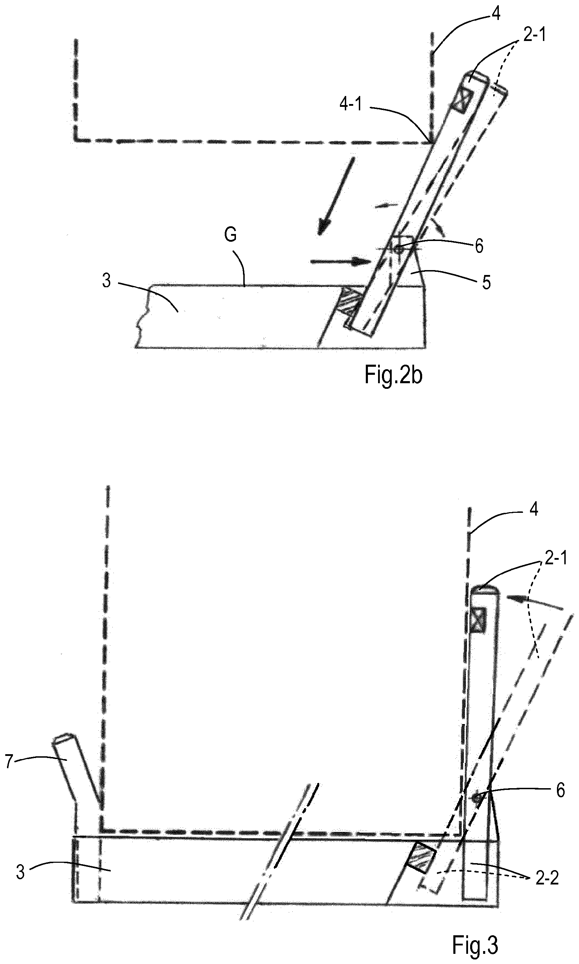

If the arm portion 2-1, which is located above the hinge pin 6, is in the unfolded state, as shown in figure 2a, it contacts the container 4 being moved towards said arm portion, and subsequently it guides the container in the direction of the downward arrow towards the base G. If the shown angle profile 4-1 of the container, i.e., where the walls of the container 4 meet, passes the hinge pin and contacts the arm portion 2-2 located below the hinge pin, said arm portion is moved outwards.

On the opposite side of the frame 3, one or more short arms 7 , shown in figures 1 and 3, are located which are bent outwards and which are fixedly, yet often removably, secured to the frame 3, and which in combination with the bottom arm portion 2-2 guide the descending container. These shorter catching arms 7, which are located on the input side of the containers 4 passing said arms above the base, help to achieve that the arm portion 2-2 is made to move outwards by the descending container.

The outward moving bottom arm portion 2-1 ensures that the top arm portion 2-1 and eventually the arm as a whole engages, in this case the right-hand side of, the container, so that the container can be positioned in a stable and enclosed manner on the base G.

Figure 1 further shows that neighbouring arms 7 are connected to one another by means of girders 8. By virtue thereof, one or more stable fences are formed around the perimeter of the base G, which are capable of taking up relatively large impacts which occur in particular when a container 4 contacts the respective arms for the first time.

The system 1 is compact if the arm portions 2-1 located above the hinge pin 6 can be folded such that they are close to the base G. By means of the abovementioned latch, the portions 2-1 and 2-2 are disconnected, enabling the hinged portions 2-1 to hinge individually such that they are flat on the frame 3. If required, the frame 3 can be mounted on a vehicle or a vessel, if the portions 2-1 are folded, and subsequently it can be transported in compact form.

Advantageously, an electric energy supply, or provisions for pneumatics or hydraulics can be dispensed with, because the above described purely mechanical measures are sufficient to make the arms 2 hinge. Depending on the circumstances, however, the container catching system 1 may comprise electrical, mechanical, electromechanical, pneumatic or hydraulic actuators, which are connected to the arms 2 for hinge movement of the arms 2, 2-1, and which may or may not be sensor controlled. In this case, the arm portions 2-2 only have to be cams of switches which, together with other means, control said actuators. And the top arm portion 2-1 can then be hinged individually by the actuator at the command of the cam, which may or may not be depressed.

The sea-proof container catching system 1 can preferably be used to hoist containers 4, in particular rescue containers for personnel or other applications, sea containers and/or service containers, on or from board a vessel provided with the container catching system.

If required, well-known corner fittings are provided on the frame 3 to lock the container 4 on the base G.

## Claims

1. A container catching system (1) which is sea proof, comprising:
- a frame (3) with a base (G) on which a container (4) is to be positioned,
- hinge pins (6) secured to the frame (3), and
- arms (2; 7) situated around the base (G), each arm (2) having an abovementioned hinge pin (6), wherein arm portions (2-1) situated above said hinge pin (6) contact, in the unfolded state, a container (4) to be lowered to guide the container (4) towards the base (G),
**characterised in that**:
- the hinge pins (6) are secured above the base (G), and
- arm portions (2-2) situated below the hinge pin (6) are arranged to move outwards when they contact the container (4), thereby causing at least the top arm (2-1) to engage the container (4).

2. The container catching system (1) according to claim 1, **characterized in that** neighbouring arms (2; 2-1) are connected to one another by means of girders (8).

3. The container catching system (1) according to claim 1 or 2, **characterized in that** at least the arm portions (2-1) located above the hinge pin (6) can be folded such that they are close to the base (G).

4. The container catching system (1) according to any one of claims 1 to 3, **characterized in that** the container catching system (1) or the frame (3) can be mounted on a vehicle or a vessel.

5. The container catching system (1) according to any one of the claims 1 to 4, **characterized in that** the container catching system (1) comprises electrical, mechanical, electromechanical, pneumatic or hydraulic actuators, which are connected to the arms (2; 2-2) for hinge movement of the arms (2), and which may or may not be sensor controlled.

6. The container catching system (1) according to any one of the claims 1 to 5, **characterized in that** the arms (2; 7) are of different length, wherein, in particular, the arms (7) on the input side, along which containers pass over the base (G), are lower than the other arms (2).

7. The container catching system (1) according to any one of the claims 1 to 6, **characterized in that** the container catching system (1) also comprises one or more arms (2; 7) which are fixedly, yet removably, arranged around the base.

8. The container catching system (1) according to claim 7, **characterized in that** the one or more arms (7) arranged along the base (G) have end portions (7) which are bent outwards above the base (G).

9. The use of the sea-proof container catching system (1) according to any one of claims 1 to 8 to hoist containers (4), in particular rescue containers for personnel or other applications, sea containers and/or service containers, on or from board a vessel provided with the container catching system (1).

## Patentansprüche

1. Containerauffangsystem (1), welches seefest ist, umfassend:
- einen Rahmen (3) mit einer Basis (G), auf welcher ein Container (4) positioniert werden soll,
- Gelenkbolzen (6), die an den Rahmen (3) befestigt sind, und
- Arme (2; 7), die sich um die Basis (G) herum befinden, wobei jeder Arm (2) einen obengenannten Gelenkbolzen (6) aufweist, wobei Armabschnitte (2-1), die sich oberhalb des Gelenkbolzens (6) befinden, im aufgeklappten Zustand einen Container (4) berühren, um abgesenkt zu werden, um den Container (4) zur Basis (G) hin zu führen,
**dadurch gekennzeichnet, dass**:
- die Gelenkbolzen (6) über der Basis (G) befestigt sind, und
- Armabschnitte (2-2), die sich unterhalb des Gelenkbolzens (6) befinden, angeordnet sind, um sich nach außen zu bewegen, wenn sie den Container (4) berühren, wodurch veranlasst wird, dass mindestens der obere Arm (2-1) den Container (4) in Eingriff nimmt.

2. Containerauffangsystem (1) nach Anspruch 1, **dadurch gekennzeichnet, dass** benachbarte Arme (2; 2-1) mittels Querträger (8) miteinander verbunden sind.

3. Containerauffangsystem (1) nach Anspruch 1 oder 2, **dadurch gekennzeichnet, dass** mindestens die Armabschnitte (2-1), die oberhalb des Gelenkbolzens (6) angeordnet sind, derart zusammengeklappt werden können, dass sie nahe der Basis (G) sind.

4. Containerauffangsystem (1) nach einem der Ansprüche 1 bis 3, **dadurch gekennzeichnet, dass** das Containerauffangsystem (1) oder der Rahmen (3) auf einem Fahrzeug oder einem Schiff montiert werden kann.

5. Containerauffangsystem (1) nach einem der Ansprüche 1 bis 4, **dadurch gekennzeichnet, dass** das Containerauffangsystem (1) elektrische, mechanische, elektromechanische, pneumatische oder hydraulische Aktuatoren umfasst, welche für die Gelenkbewegung der Arme (2) mit den Armen (2; 2-2) verbunden sind und welche sensorgesteuert sein können oder nicht.

6. Containerauffangsystem (1) nach einem der Ansprüche 1 bis 5, **dadurch gekennzeichnet, dass** die Arme (2; 7) von unterschiedlicher Länge sind, wobei insbesondere die Arme (7) an der Eingangsseite, entlang welcher Container über die Basis (G) passieren, niedriger als die anderen Arme (2) sind.

7. Containerauffangsystem (1) nach einem der Ansprüche 1 bis 6, **dadurch gekennzeichnet, dass** das Containerauffangsystem (1) auch einen oder mehrere Arme (2; 7) umfasst, welche fest, jedoch entfernbar, um die Basis herum angeordnet sind.

8. Containerauffangsystem (1) nach Anspruch 7, **dadurch gekennzeichnet, dass** der eine oder die mehreren Arme (7), die entlang der Basis (G) angeordnet sind, Endabschnitte (7) aufweisen, welche oberhalb der Basis (G) nach außen gebogen sind.

9. Verwendung des seefesten Containerauffangsystems (1) nach einem der Ansprüche 1 bis 8, um Container (4), insbesondere Rettungscontainer für Personal- oder andere Verwendungen, Seecontainer und/oder Dienstleistungscontainer, an oder von Bord eines mit dem Containerauffangsystem (1) versehenen Schiffs zu heben.

## Revendications

1. Système de capture de conteneur (1) de type maritime, comprenant :
- un cadre (3) doté d'une base (G) sur laquelle un conteneur (4) doit être positionné,
- des axes d'articulation (6) fixés au cadre (3), et
- des bras (2; 7) situés autour de la base (G), chaque bras (2) comportant un axe d'articulation précité (6), les sections du bras (2-1) situées au-dessus dudit axe d'articulation (6) étant en contact, en état déplié, avec un conteneur (4) à baisser pour guider le conteneur (4) vers la base (G),
**caractérisé en ce que** :
- les axes d'articulation (6) sont fixés au-dessus de la base (G), et
- les sections du bras (2-2) situées au-dessus de l'axe d'articulation (6) étant conçues pour se déplacer vers l'extérieur lorsqu'elles viennent en contact avec le conteneur (4) en amenant ainsi au moins le bras supérieur (2-1) à s'engager dans le conteneur (4).

2. Système de capture de conteneur (1) selon la revendication 1, **caractérisé en ce que** les bras voisins (2; 2-1) sont connectés l'un à l'autre au moyen de poutres (8).

3. Système de capture de conteneur (1) selon la revendication 1 ou 2, **caractérisé en ce qu'**au moins les sections du bras (2-1) situées au-dessus de l'axe d'articulation (6) peuvent être pliées de manière à être proches de la base (G).

4. Système de capture de conteneur (1) selon l'une quelconque des revendications 1 à 3, **caractérisé en ce que** le système de capture de conteneur (1) ou le cadre (3) peut être monté sur un véhicule ou un vaisseau.

5. Système de capture de conteneur (1) selon l'une quelconque des revendications 1 à 4, **caractérisé en ce que** le système de capture de conteneur (1) comprend des actionneurs électrique, mécanique, électromécanique, pneumatique ou hydraulique qui sont connectés aux bras (2; 2-2) pour le mouvement articulé des bras (2), et qui peuvent ou non être commandés par capteur.

6. Système de capture de conteneur (1) selon l'une quelconque des revendications 1 à 5, **caractérisé en ce que** les bras (2; 7) sont de longueur différente, sachant que, en particulier, les bras (7) du côté entrée le long duquel les conteneurs passent au-dessus de la base (G) sont plus bas que les autres bras (2).

7. Système de capture de conteneur (1) selon l'une quelconque des revendications 1 à 6, **caractérisé en ce que** le système de capture de conteneur (1) comprend également un ou plusieurs bras (2; 7) qui sont disposés de manière fixe mais amovible autour de la base.

8. Système de capture de conteneur (1) selon la revendication 7, **caractérisé en ce que** le ou les plusieurs bras (7) disposés le long de la base (G) comportent des sections terminales (7) qui sont courbées vers l'extérieur au-dessus de la base (G).

9. Utilisation du système de capture de conteneur (1) selon l'une quelconque des revendications 1 à 8 pour lever des conteneurs (4), en particulier des conteneurs de sauvetage pour du personnel ou d'autres applications, des conteneurs marins et/ou des conteneurs d'entretien à bord ou depuis le bord d'un vaisseau équipé du système de capture de conteneur (1) .
